# EUROPEAN PATENT APPLICATION

(11) **EP 4 644 098 A1**
(43) Date of publication of application: **05.11.2025**
(21) Application number: 25172143.7
(22) Date of filing: 24.04.2025
(51) Int. Cl.: B29C 65/34, B29C 65/66, B29C 65/72, B29C 65/82, B29C 73/30, F16L 59/20, B29C 44/34, B29C 65/78, B29L 23/00, B29L 31/24, F16L 47/02

(54) **METHOD AND APPARATUS FOR JOINING OR REPAIRING THERMALLY-INSULATED PIPING**

(30) Priority: 29.04.2024 SE 2450462
(71) Applicant: TSC Innovation AB, 901 30 Umeå (SE)
(72) Inventor: BODÉN, Tobias, 931 95 Skellefteå (SE)
(74) Representative: Zacco Sweden AB

(57) **Abstract**

Joining or repairing thermally-insulated piping (100), where an outer pipe (10) surrounds an inner pipe (30) embedded in an insulating layer (20), involves arranging an electrically conductive strip (60) around outer pipe ends (12) with a predetermined gap (G) between strip ends (62), positioning a heat-shrinkable sleeve (50) to cover the inner pipe (12) and overlap the conductive strips (60) and shrinking the sleeve (50) onto the outer pipe ends (12), forming welding joints (80) by applying a pressure and applying an electric current to conductive strip (60) to thereby fuse the outer pipe (10) and sleeve (50) while some molten plastic accumulates at the gap (G) to form a protrusion (84) on the sleeve outer surface.

A tool (200) with a clamping band (212) may be used f or applying pressure around the sleeve (50). The tool may have a guiding element (260) to guide the molten plastic material.

## Description

### Technical field

The present disclosure relates to a method for joining or repairing thermally-insulated piping and an apparatus for joining or repairing thermally-insulated piping. More specifically, the disclosure relates to a method for joining or repairing thermally-insulated piping and an apparatus for joining or repairing thermally-insulated piping as defined in the introductory parts of the independent claims.

### Background art

Thermally insulated pipelines are essential components in industries where maintaining the temperature of the transported fluid is critical. They are commonly used in the oil and gas industry to prevent heat loss in fluids traveling long distances, as well as in district or remote heating systems and district or remote cooling systems. Typically, thermally insulated pipelines consist of an inner steel pipe that carries the fluid, surrounded by an insulating layer to minimize thermal exchange, and an outer protective layer. The insulating material can vary from polyurethane foam to aerogels, depending on the required thermal performance. The outer layer may comprise a moisture-proof, weldable plastic casing, for example comprising PEHD, also known as HDPE (high-density polyethylene).

Thermally insulated pipelines are typically buried under ground are thereby subjected to high stresses and strains which eventually may lead to damages and will require repair. Repairing thermally insulated pipelines poses several challenges, such as accessing the damage, restoring insulation and ensuring integrity of the pipeline to prevent future leaks or heat loss. Repairing these types of pipes or pipelines is thus a difficult and expensive process and it is crucial that pipe joints and repairs are performed accurately and with the highest quality. Different methods of joining the outer pipes of heating piping are commercially available. Methods which utilize welding joints are often more advantageous in the long term than other solutions. However, problems may occur with welding joints as well. For example, it is difficult to always achieve high quality when performing work manually, specifically when performing such tasks in challenging environments, which is often the case. Variations in pressure and temperature will also have a negative impact on the welding joint.

As an example, document US4703150A shows a method comprising a weldable sleeve body having a heating element embedded therein defining a welding area for generating heat for welding the body to the pipe elements. Other known methods involve the use of an axially split or slotted plastic sleeve that has a heating element fused into the inner surface of each end of the sleeve. A problem with such solutions is that there is a risk of damaging the heating element that is embedded in the inner surface of the sleeve, when grinding or polishing the surface to remove dirt or oxides. Furthermore, fusion of a heating element in the inner surface of a sleeve requires the sleeves to be produced in multiple lengths, which, in turn, means that a person carrying out repairs must have access to a large number of sleeves.

There is thus a need for achieving an improved method and apparatus for joining or repairing thermally-insulated piping.

### Summary

It is an object of the present disclosure to mitigate, alleviate or eliminate one or more of the above-identified deficiencies and disadvantages in the prior art and solve at least the above-mentioned problem.

According to a first aspect there is provided a method for joining or repairing thermally-insulated piping, the piping comprising an outer pipe surrounding an inner pipe embedded in an insulating layer, wherein a section of the inner pipe is substantially exposed between two mutually opposing pipe ends of the outer pipe, wherein the method comprises: providing a heat-shrinkable sleeve of weldable plastic material to cover the exposed section of the inner pipe; arranging an electrically conductive strip around each outer pipe end, such that there is a predetermined gap between the strip ends; connecting electrical conductors to the strip ends; positioning the sleeve such that it overlaps the conductive strips and heating the sleeve so that it shrinks onto the outer pipe ends; forming welding joints by applying a pressure on the overlaps, except at the gap between the strip ends, and applying an electric current to the electrical conductors, thereby heating and fusing the strip with the plastic surfaces lying in abutment therewith and creating an expansion zone at the gap between the strip ends where molten plastic material will accumulate and form a protrusion.

By using a shrink sleeve and separate conductive strips, the operator can use standard shrink sleeves without embedded heating elements and easily adapt the length of the sleeve to the specific case. Repairing and joining will thereby be facilitated and less costly. Furthermore, by arranging the conductive strips such that there is a gap between the strip ends, and connecting electrical conductors to the strip ends, the gap will act insulating between the conductors and the process and/or apparatus used for welding will not require separate insulating elements to prevent sparking or short circuiting. Also, by leaving an area at the overlap pressure-free during welding, molten plastic material will flow to the pressure-free area and an expansion zone is thereby created. This way, a protrusion of plastic material will be formed which will reduce the risk for leakage at the area between the strip ends. High quality circumferential welding joints are this way achieved. Furthermore, the formed protrusion will act as an indicator showing how well the welding joint has been performed. If the protrusion has the wrong shape or size, one may conclude that the welding joint is of poor quality. If that is the case, the welding joint is cooled down and subsequently remade.

The length of the sleeve suitably exceeds the distance between the two outer pipe ends such that the sleeve overlaps the outer pipe ends when mounted. The diameter of the sleeve is larger than the diameter of the outer pipe. Thus, two overlaps will be formed when the sleeve is positioned correctly.

The outer pipe and the heat-shrinkable sleeve may comprise high density polyethylene (PE-HD).

The conductive strips are suitably permeable to molten plastic. This way, the plastic material of the outer pipe and the plastic material of the sleeve will easily fuse and form the circumferential welding joint when electric current is applied to the conductors and the strip is heated. For example, the conductive strips may comprise a net or mesh. Using a net or mesh strip will also results in a more uniform distribution of heat over the weld which improves the quality of the welding joint. The width of the strip may be between 30-50 millimeters, preferably 40 millimeters.

The heat-shrinkable sleeve may be configured and arranged such that the overlaps between the sleeve and the outer pipe ends at least corresponds to the width of the electrically conductive strip. When the sleeve is heated, it will shrink and embrace the outer pipe ends and cover the conductive strip. The conductive strips will thereby be arranged between the outer pipe and the sleeve.

The welding joints may be formed by means of an apparatus configured to apply a pressure circumferentially on the sleeve and the outer pipe at the overlaps, except at the gap between the strip ends. This way, an expansion zone can be created at the gap between the strip ends. It is thus to be understood that pressure is applied everywhere circumferentially on the sleeve, except for a small area at the gap between the strip ends. It is to be understood that even though a specific apparatus is described herein, the welding joints may be formed with any kind of apparatus that can apply a circumferential pressure except at the gap between the strip ends.

The welding joints may be formed by means of an apparatus comprising a clamping device and a tensioning device, wherein the tensioning device comprises two guide rollers arranged in parallel with a gap between one another, wherein the apparatus is configured to be arranged with the gap between the guide rollers aligned with the gap between the strip ends. This way, no pressure will be applied at the gap between the strip ends and the expansion zone can be created. The clamping device typically comprises a clamping band configured to be arranged in a loop around the sleeve when having shrunk onto the outer pipe ends. Clamping bands of different length may be used depending on the diameter of the outer pipe and the sleeve. The tensioning device is connectable to the ends of the clamping band and is configured to tighten and retain the clamping band to apply a pressure on the overlaps, except at the gap between the strip ends, during welding. Thus, by tightening the clamping band, a pressure is applied circumferentially around the sleeve and the outer pipe at the overlaps, except at the gap between the strip ends. The clamping band may first be somewhat tightened by rotating a tensioning roller. Subsequently, the desired pressure may be achieved by means of turning a torque wrench of the tensioning device to a predetermined position corresponding to a predetermined pressure. Torque wrenches of different lengths may be used depending on the diameter of the outer pipe and sleeve. The apparatus will be further described below.

Arranging an electrically conductive strip around each outer pipe end may involve cutting each strip to a suitable length. The length of the conductive strips may essentially correspond to the circumference of the outer pipe on which it will be arranged. Typically, the conductive strip should be longer than the circumference of the outer pipe. The conductive strips may be attached to the outer pipe ends by means of staples or similar.

In one example, the predetermined gap between the strip ends is 4-5 millimeters. This way, insulation between the electrical conductors is ensured and the risk for leakage is reduced.

In some examples, a distance tool is used to ensure the predetermined gap between the strip ends of the conductive strips. The distance tool may comprise two essentially rectangular and chamfered plates arranged in parallel and at a distance from each other. Each chamfered plate comprises a chamfered longitudinal side or edge. The plates are arranged with the chamfered longitudinal sides of the plates facing each other. The chamfered plates are connected at one end by means of a transverse plate arranged perpendicularly to the two chamfered plates. The distance tool is suitably used by inserting the strip ends between the two chamfered plates and folding the strip ends away from each other over the respective chamfered plate. This way, the predetermined gap between the strip ends will be achieved. Thus, the distance between the two chamfered plates of the distance tool corresponds to the predetermined gap between the strip ends. Folding the strip ends over the chamfered plates may give the strip two folding lines, one at each strip end, where the strip should be cut to achieve a suitable length to connect the electrical conductors.

The step of connecting the electrical conductors to the strip ends may involve folding the strip ends over the electrical conductors. One electrical conductor is attached to each strip end. The electrical conductors may also be referred to as electrodes. Each electrical conductor may comprise stripped ends, wherein one stripped end is connected to a strip end and the other stripped end is connected to a welding system providing the electrical current. The strip ends should be folded over the electrical conductors such that the predetermined gap is maintained between the strip ends and thus between the conductors. The strip will thus not encircle the entire circumference of the outer pipe, but leave a gap between the ends of the strip. The electrical conductors may be further attached to the strip by means of pressing the conductors between the folded strip ends using a pair of pliers. The folded ends of the strip may subsequently be attached by means of staples or similar, such that the electrical conductors are held in place.

The electrical conductors may be connected to the welding system via specific connectors. The welding may be performed by using a 230 V welding system or some other relevant mains voltage, which simplifies drawing of electricity to the electrical conductors and reduces set-up times and requirements on electrical plant capacity. When applying electric current to the electrical conductors, the entire conductive strip will be heated simultaneously and the plastic surfaces around the conductive strip will melt and fuse together. When the current is switched off, a reinforced, broad and fully molten weld joint is achieved.

The method may further comprise brushing an inner surface of the sleeve and an outer surface of the outer pipe ends before arranging the conductive strip between said surfaces. Brushing, grinding or polishing the surfaces will remove dirt and/or oxides and improve the quality of the welding joint.

Furthermore, the method may comprise drilling a hole through the sleeve to enable pressure-testing of the welding joint from inside the sleeve. The hole is suitably drilled outside the overlap at the outer pipe ends, and thus only in the sleeve. Pressure testing from inside the sleeve is very important to make sure that the welding joints have been performed accurately and are of highest quality.

After having pressure tested the welding joints, the method may comprise filling the space between the inner pipe and the sleeve with insulation through the drilled hole and sealing the hole. The insulation may be a polyurethane foam or similar. The drilled hole may be sealed using a conical plastic plug that is welded in the hole.

According to a second aspect there is provided an apparatus for joining or repairing thermally-insulated piping, the piping comprising an outer pipe surrounding an inner pipe embedded in an insulating layer, wherein a section of the inner pipe is substantially exposed between two mutually opposing pipe ends of the outer pipe, and a heat-shrinkable sleeve of weldable plastic material is provided to cover the exposed section of the inner pipe and overlap the outer pipe ends, and wherein electrically conductive strips are arranged around each outer pipe end, such that there is a predetermined gap between the strip ends, and electrical conductors are connected to the strip ends, the apparatus comprising: a clamping device comprising a clamping band configured to be arranged in a loop around the sleeve when having shrunk onto the outer pipe ends; and a tensioning device connectable to the clamping band and configured to tighten and retain the clamping band to apply a pressure on the overlaps, except at the gap between the strip ends so that, when electric current is applied to the electrical conductors, an expansion zone is created at the gap between the strip ends where molten plastic material will accumulate and form a protrusion.

Due to the gap between the electrical conductors, insulation is achieved and the apparatus for joining or repairing thermally-insulated piping will not require separate insulation elements. Furthermore, since separate electrical conductors are attached to the conductive strip, the apparatus will not require any conductive parts but only provide the pressure around the sleeve and the outer pipe.

It is to be understood that effects and features of the second aspect are to a large extent analogous to those described above in connection with the first aspect. Embodiments mentioned in relation to the first aspect are largely compatible with the second aspect.

The tensioning device may comprise a tensioning roller configured to be rotated in order to tighten the clamping band. The clamping band is suitably connected to the tensioning device such that a loop is formed, which loop is configured to surround the sleeve during welding. A first end of the clamping band may be fixedly attached to the apparatus. A second end of the clamping band may be connected to the tensioning roller. By rotating the tensioning roller in a first direction, the clamping band will be wound up on the roller and the loop of the clamping band will be tightened around the sleeve. By rotating the tensioning roller in a second opposite direction, the clamping band will be unrolled from the tensioning roller and the tension of the clamping band is reduced.

The apparatus may further comprise a removable torque wrench configured to be turned to a predetermined position in order to apply a desired torque or force and thereby achieve the desired pressure around the sleeve. Turning the torque wrench will cause a vertical movement of the apparatus housing, such that the clamping band is affected. This way, a force is applied at both ends of the clamping band and the clamping band will provide the desired pressure around the sleeve.

The tensioning device may further comprise two guide rollers arranged in parallel with a gap between one another, the clamping band running between the guide rollers, wherein the apparatus is configured to be arranged with the gap between the guide rollers aligned with the gap between the strip ends. Typically, one end of the clamping band is running past one of the guide rollers, and the other end of the clamping band is running past the other guide roller. The gap between the guide rollers and the clamping band running between the guide rollers will cause the clamping band to not abut the sleeve at the gap between the guide rollers. With a larger gap between the guide rollers, a larger area on the sleeve will not be abutting the clamping band. Positioning the apparatus with the gap between the guide rollers aligned with the gap between the strip ends, no pressure will be applied at the gap between the strip ends and an expansion zone for the fused plastic material is created. Thus, the clamping band will not abut the sleeve at the gap between the strip ends. The gap between the guide rollers may correspond to the gap between the strip ends. For example, the gap between the guide rollers may be between 4-6 millimeters.

The clamping band may be laminated with a polymer material. The clamping band may comprise Kevlar and Teflon. In such event, the clamping band should be arranged with the laminated/Kevlar/Teflon surface abutting the sleeve.

The apparatus may further comprise a support part, configured to abut the sleeve during welding. The support part may be arranged adjacent the guide rollers, outwardly of the guide rollers.

The tensioning device may comprise a latching mechanism allowing the clamping band to move freely in one direction and of latching the clamping band in an opposite direction to enable the tensioning force to be applied. The latching mechanism may comprise a ratchet mechanism. The latching mechanism may thus be connected to the tensioning roller. When the latching mechanism is activated, the tensioning roller may only be rotatable in the first direction thereby allowing tensioning of the clamping band but not allowing loosening of the clamping band.

The apparatus may further comprise a guiding element configured to be arranged between the two guide rollers to guide the molten plastic material to the expansion zone during welding. The guiding element may be wedge-shaped with a bottom part and two side parts. The two side parts are connected to the bottom part and to each other forming an essentially triangular cross-sectional shape. The side parts may be somewhat concave with a curvature corresponding to the radii of the guide rollers. The guiding element is configured to be arranged with the side parts facing the guide rollers and the bottom part facing the sleeve during welding. The bottom part may comprise a recess configured to form the protrusion of molten plastic material in the expansion zone. The recess will facilitate for the molten material to flow in that direction, and the molten material will thereby fill the recess and form a protrusion with a shape corresponding to the shape of the recess. When the electric current is removed and the welding joint has cooled down, the protrusion has hardened. The guiding element may comprise silicone or rubber.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows an exploded view of a thermally-insulated piping ready to be joined or repaired by means of a method and apparatus according to examples of the present disclosure.
Figures 2a-b show details pertaining to a method and apparatus for joining or repairing thermally-insulated piping according to examples of the present disclosure.
Figures 3a-c show details pertaining to an apparatus for joining or repairing thermally-insulated piping according to examples of the present disclosure.
Figures 4a-b show details pertaining to an apparatus for joining or repairing thermally-insulated piping according to examples of the present disclosure.
Figure 5 shows details of a welding joint achieved by means of a method and apparatus for joining or repairing thermally-insulated piping according to examples of the present disclosure.
Figure 6 shows a detail pertaining to the method for joining or repairing thermally-insulated piping according to an example of the present disclosure.
Figure 7 shows a diagram over a method for joining or repairing thermally-insulated piping according to an example of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

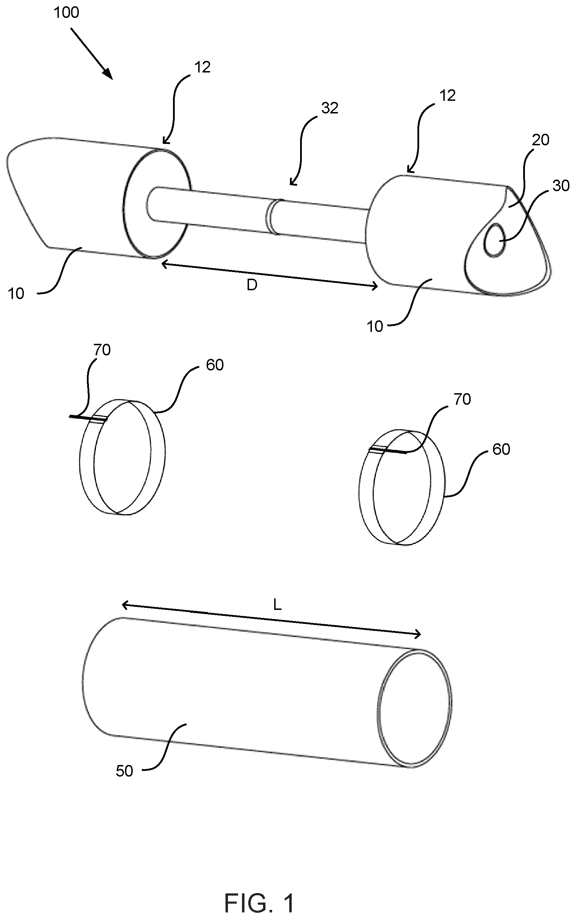

Figure 1 shows a part of a thermally-insulated piping 100 ready to be joined or repaired by means of method and apparatus 200 for joining or repairing thermally-insulated piping 100 according to examples of the present disclosure. The piping 100 comprises an outer pipe 10 surrounding an inner pipe 30 embedded in an insulating layer 20. The inner pipe 30 may comprise steel and the outer pipe 10 may comprise weldable plastic material. The inner pipe 30 may have been damaged and required reparation whereby a part of the outer pipe 10 has been removed as well as the insulating layer 20. A section 32 of the inner pipe 30 is therefore exposed between two mutually opposing pipe ends 12 of the outer pipe 10.

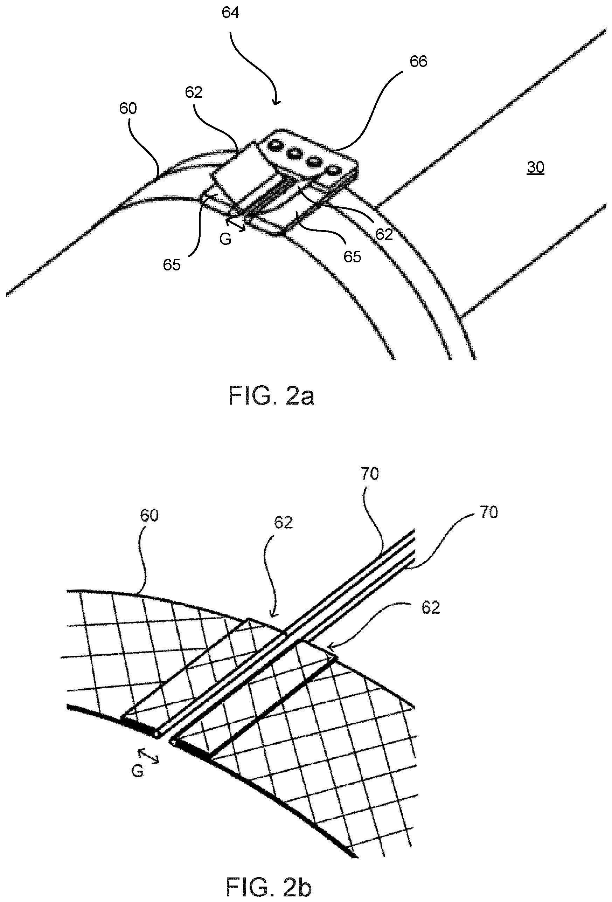

To repair the outer pipe 10 and cover the exposed section 32 of the inner pipe 30, a heat-shrinkable sleeve 50 of weldable plastic material is used. The length L of the sleeve 50 exceeds the distance D between the two outer pipe ends 12 such that the sleeve 50 will overlap the outer pipe ends 12 when being mounted. The sleeve 50 is attached to the pipe ends 12 of the outer pipe 10 by means of welding joints and thus by electrofusion of the plastic material of the outer pipe 10 and the sleeve 50. To achieve the welding joints, electrically conductive strips 60 are arranged around each outer pipe end 12 and electrical conductors 70 are connected to the strips 60. Subsequently, the sleeve 50 is positioned such that it overlaps the conductive strips 60 and the sleeve 50 is heated so that it shrinks onto the outer pipe ends 12. The welding joints are further formed by applying a pressure circumferentially around the sleeve 50 at the overlaps and applying an electric current to the electrical conductors 70 over a given period of time. Further details about the method for repairing or joining the piping 100 will be described with regard to Figures 2-7.

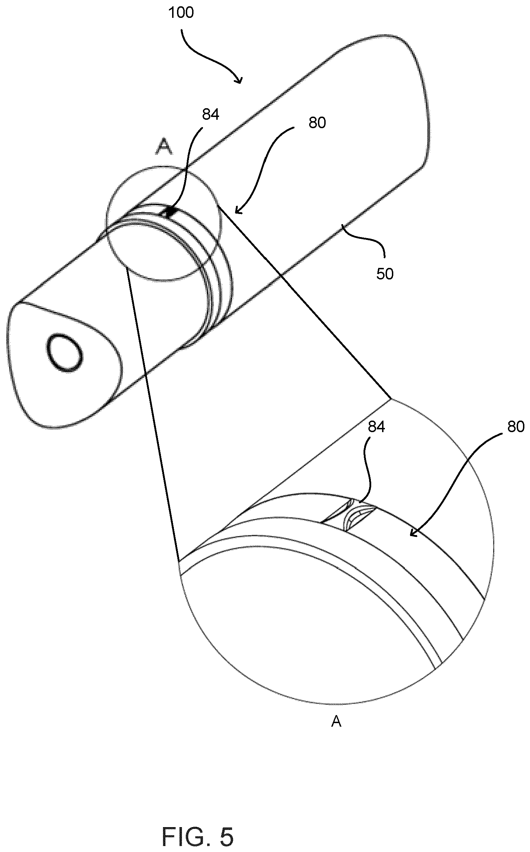

Figures 2a-b show details pertaining to a method and apparatus 200 for joining or repairing thermally-insulated piping 100 according to examples of the present disclosure. The piping 100 is configured as disclosed in Figure 1. Figures 2a-b show how the electrically conductive strip 60 is arranged such that there is a predetermined gap G between the strip ends 62. It further shows two electrical conductors 70, one connected to each strip end 62 of the conductive strip 60. There will thus be a predetermined gap G between the electrical conductors 70. The predetermined gap G will act insulating and prevent sparking and short circuiting between the conductors 70. When forming the welding joints, the method involves applying pressure on the overlaps, except at the gap G between the strip ends 62. When electric current is applied to the electrical conductors 70, the strip 60 will be heated and fused with the plastic surfaces lying in abutment therewith and an expansion zone will be created at the gap G between the strip ends 62 where molten plastic material will accumulate and form a protrusion (see Figure 5). The predetermined gap G between the strip ends 62 may be 4-5 millimeters.

The conductive strips 60 may be permeable to molten plastic. This way, the plastic material of the outer pipe 10 and the plastic material of the sleeve 50 will easily fuse and form the circumferential welding joint when electricity is applied on the conductive strips 60. As illustrated in Figure 2b, the conductive strips 60 may comprise a net or mesh. Connecting the electrical conductors 70 to the strip ends 62 may involve folding the strip ends 62 over the electrical conductors 70 as shown in Figure 2b. The strip ends 62 should be folded over the electrical conductors 70 such that the predetermined gap G is maintained between the strip ends 62 and thus between the conductors 70.

Arranging the electrically conductive strip 60 around the outer pipe end 12 involves cutting each conductive strip 60 to a suitable length. A distance tool 64 may also be used to ensure the predetermined gap G between the strip ends 62. This is illustrated in Figure 2a. The distance tool 64 in this example comprises two chamfered plates 65 arranged in parallel at a distance from each other with the chamfered longitudinal sides of the plates 65 facing each other. The chamfered plates 65 are connected at one end by means of a transverse plate 66 arranged perpendicularly to the two chamfered plates 65. The distance tool 64 is used by inserting the strip ends 62 between the two chamfered plates 65 and folding the strip ends 62 away from each other over the respective plate 65. This way, the predetermined gap G between the strip ends 62 will be achieved.

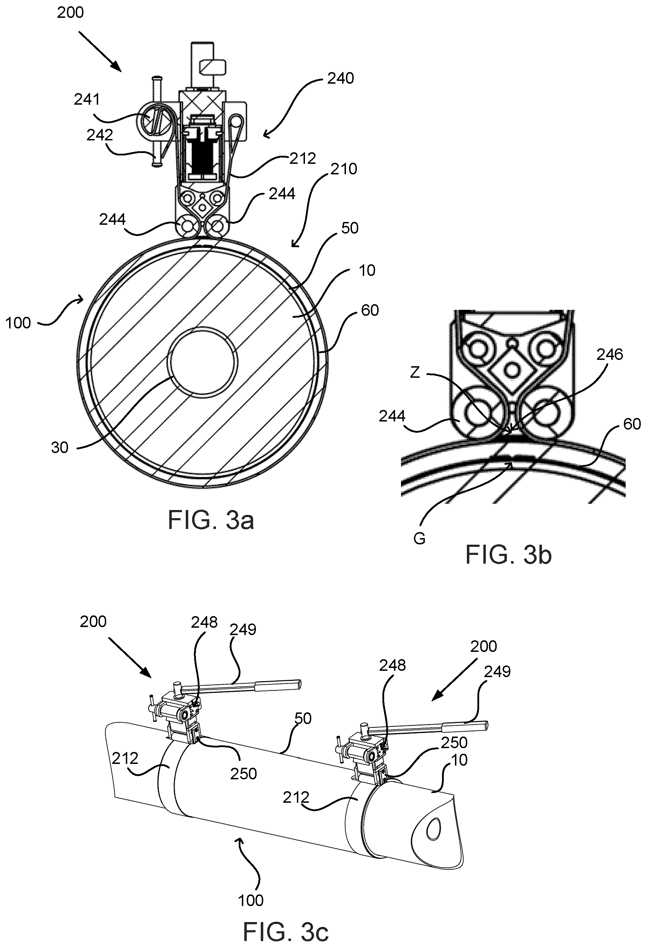

Figures 3a-c show details pertaining to an apparatus 200 for joining or repairing thermally-insulated piping 100 according to examples of the present disclosure. The piping 100 is configured as disclosed in Figure 1. The apparatus 200 is used to form the welding joints connecting the sleeve 50 and the outer pipe 10 of the piping 100.

Figure 3a shows a cross-sectional view of the apparatus 200 arranged on the piping 100 during welding. The apparatus 200 comprises a clamping device 210 and a tensioning device 240 and is configured to apply the pressure around the overlaps during welding. The clamping device 210 comprises a clamping band 212 configured to be arranged in a loop around the sleeve 50 when the sleeve 50 has shrunk onto the outer pipe ends 12. The clamping band 212 may be laminated with a polymer material. Specifically, the clamping band 212 may comprise Kevlar and Teflon. The tensioning device 240 is connectable to the free ends of the clamping band 212 and is configured to tighten and retain the clamping band 212 to apply a pressure on the overlaps, except at the gap G between the strip ends 62.

The tensioning device 240 comprises a tensioning roller 241 configured to be rotated in order to tighten the clamping band 212. The tensioning roller 241 may be rotated by means of a lever or handle 242. A first end of the clamping band 212 may be fixedly attached to the apparatus 200. By rotating the tensioning roller 241 in a first direction, the clamping band 212 will be wound up on the roller 241 and the loop of the clamping band 212 will be tightened around the sleeve 50. By rotating the tensioning roller 241 in a second opposite direction, the clamping band 212 will be unrolled from the tensioning roller 241 and the tension of the clamping band 212 is reduced.

The tensioning device 240 further comprises two guide rollers 244 arranged in parallel with a gap 246 between one another, this is specifically visible in the enlarged view shown in Figure 3b. The clamping band 212 runs between the guide rollers 244. The apparatus 200 is configured to be arranged with the gap 246 between the guide rollers 244 aligned with the gap G between the strip ends 62. This way, a pressure-free area is achieved at the gap G between the strip ends 62 and an expansion zone Z is created between the guide rollers 244 where molten material can accumulate.

Figure 3c shows the piping 100 with one apparatus 200 at each end of the sleeve 50. The apparatus 200 further comprises a removable torque wrench 249 configured to be turned to a predetermined position in order to apply a desired torque and thereby achieve the desired pressure around the sleeve 50. The tensioning device 240 may also comprise a latching mechanism 248 allowing the clamping band 212 to move freely in one direction and of latching the clamping band 212 in an opposite direction to enable the tensioning force to be applied. The latching mechanism 248 may comprise a ratchet mechanism. The latching mechanism 248 may thus be connected to the tensioning roller 241. The apparatus 200 may further comprise a support part 250, configured to abut the sleeve 50 during welding. The support part 250 may be arranged adjacent the guide rollers 244, outwardly of the guide rollers 244.

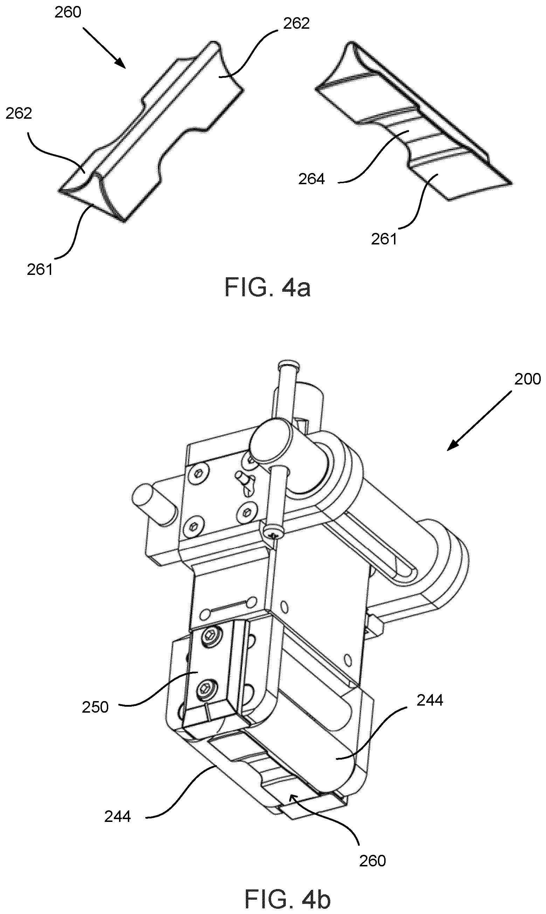

Figures 4a-b show details pertaining to an apparatus 200 for joining or repairing thermally-insulated piping 100 according to an example of the present disclosure. The piping 100 is configured as disclosed in Figure 1 and the apparatus is configured as disclosed in Figure 3a-c. In this example, the apparatus 200 further comprises a guiding element 260 configured to be arranged between the two guide rollers 244 of the tensioning device 240. The guiding element 260 is configured to guide the molten plastic material to a predetermined area of the expansion zone Z during welding. Figure 4a shows different views of the guiding element 260 and Figure 4b shows the guiding element 260 arranged in the apparatus 200.

The guiding element 260 is wedge-shaped with a bottom part 261 and two side parts 262 connected to the bottom part 261 and to each other. The guiding element 260 is configured to be arranged with the side parts 262 facing the guide rollers 244 and the bottom part 261 facing the sleeve 50 during welding. Thus, the guiding element 260 is configured to be arranged with the tip inserted between the guide rollers 244. The guiding element 260 may have an essentially triangular cross-sectional shape. The side parts 262 may be somewhat concave, with a curvature corresponding to the radii of the guide rollers 244. This way, the guiding element 260 will not obstruct rotation of the guide rollers 244.

The bottom part 261 may comprise a recess 264 configured to form the protrusion 84 of molten plastic material. The recess 264 in the bottom part 261 will cause the molten material so flow to the recess 264 during welding. This way, the guiding element 260 will ensure that the protrusion 84 of molten material has a shape and size corresponding to the shape and size of the recess 264.

Figure 5 shows details of a welding joint 80 achieved by means of a method and apparatus 200 for joining or repairing thermally-insulated piping 100 according to an example of the present disclosure. The piping 100 is configured as disclosed in Figure 1 and the apparatus is configured as disclosed in Figure 3a-c or 4a-b.

This figure shows the welding joint 80 achieved after having used the apparatus 200 and applied electric current to the electrical conductors 70. As can be seen, the clamping band 212 has made a mark around the sleeve 50 due to the applied pressure. Furthermore, a protrusion 84 of plastic material has been formed at the gap G between the strip ends 62 and where the gap 246 between the guide rollers 244 was during welding. In this example, the protrusion 84 has a waist and a shape corresponding to the recess 264 of the guiding element 260 as disclosed in Figure 4a-b. The protrusion 84 will reduce the risk for leakage at the gap G between the strip ends and will act as an indicator showing how well the welding joint 80 has been performed.

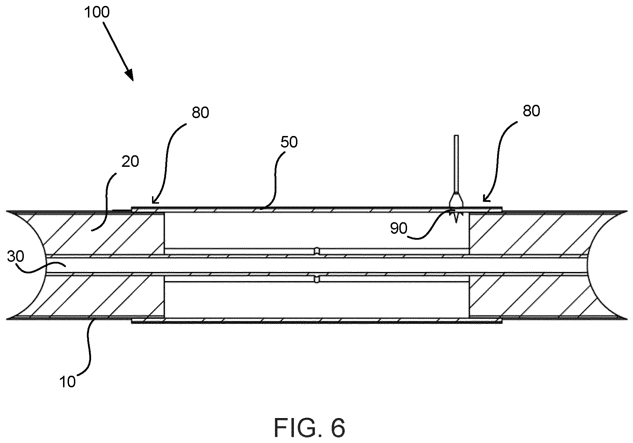

Figure 6 shows a detail pertaining to a method for joining or repairing thermally-insulated piping 100 according to an example of the present disclosure. The piping 100 is configured as disclosed in Figure 1. The figure shows the piping 100 when the sleeve 50 has been attached to the outer pipe 10 by means of welding joints 80. When the welding joints 80 have cooled down, a hole 90 may be drilled through the sleeve 50 to enable pressure-testing of the welding joints 80 from inside the sleeve 50. The hole 90 is drilled outside the overlap at the outer pipe ends 12, and thus only in the sleeve 50. Pressure testing from inside the sleeve 50 is very important to make sure that the welding joints 80 have been performed accurately.

After having pressure tested the welding joints 80, the space between the inner pipe 30 and the sleeve 50 is typically filled with insulation through the drilled hole 90 and the hole 90 is sealed, for example by a conical plastic plug that is welded in the hole 90.

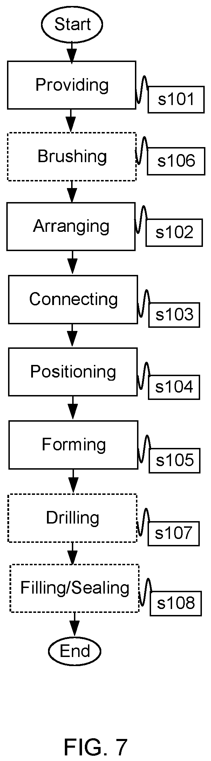

Figure 7 shows a diagram over a method for joining or repairing thermally-insulated piping 100 according to an example of the present disclosure. The piping 100 is configured as disclosed in Figure 1. The method is performed by using, amongst others, an apparatus 200 as disclosed in Figures 3a-c or 4a-b. Thus, the piping 100 comprising an outer pipe 10 surrounding an inner pipe 30 embedded in an insulating layer 20, wherein a section 32 of the inner pipe 30 is substantially exposed between two mutually opposing pipe ends 12 of the outer pipe 10.

The method comprises providing s101 a heat-shrinkable sleeve 50 of weldable plastic material to cover the exposed section 32 of the inner pipe 30; arranging s102 an electrically conductive strip 60 around each outer pipe end 12, such that there is a predetermined gap G between the strip ends 12; connecting s103 electrical conductors 70 to the strip ends 62; positioning s104 the sleeve 50 such that it overlaps the conductive strips 60 and heating the sleeve 50 so that it shrinks onto the outer pipe ends 12; and forming s105 welding joints 80 by applying a pressure on the overlaps except at the gap G between the strip ends 62, and applying an electric current to the electrical conductors 70, thereby heating and fusing the strip 60 with the plastic surfaces lying in abutment therewith and creating an expansion zone Z at the gap G between the strip ends 62 where molten plastic material will accumulate and form a protrusion 84.

Electric current is suitably applied to the electrical conductors 70 over a given period of time. It is to be understood that the step of forming s105 welding joints 80 may be performed one welding joint 80 at a time, or both welding joints 80 simultaneously. Thus, one apparatus 200 may be used to achieve both welding joints 80, or two apparatuses 200 may be used simultaneously.

The step of arranging s102 an electrically conductive strip 60 around each outer pipe end 12 may involve cutting each conductive strip 60 to a suitable length. It may also involve attaching the conductive strips 60 to the outer pipe ends 12 by means of staples or similar. Furthermore, arranging s102 an electrically conductive strip 60 around each outer pipe end 12 may involve using a distance tool 64 to ensure that the predetermined gap G is achieved between the strip ends 62.

The step of connecting s103 the electrical conductors 70 to the strip ends 62 may involve folding the strip ends 62 over the electrical conductors 70. The conductors 70 are arranged perpendicularly to the longitudinal extension of the strip 60, such that the conductors 70 will extend away from the sleeve 50. The strip ends 62 are suitably folded over the electrical conductors 70 such that the predetermined gap G is maintained between the strip ends 62 and thus between the conductors 70. Connecting s103 the electrical conductors 70 to the strip ends 62 may further comprise pressing the conductors 70 between the folded strip ends 62 using a pair of pliers. The folded ends 62 of the strip 60 may subsequently be attached by means of staples or similar, such that the electrical conductors 70 are held in place.

The step of forming s105 welding joints 80 may comprise connecting the electrical conductors 70 to a welding system via specific connectors. When electric current is applied to the conductors 70, the entire conductive strip 60 will be heated simultaneously and the plastic surfaces around the strip 60 will melt and fuse together. When the current is switched off, a reinforced, broad and fully molten welding joint 80 is achieved.

The method may further comprise brushing s106 an inner surface of the sleeve 50 and an outer surface of the outer pipe ends 12 before arranging the strips 60 between said surfaces. Brushing, grinding or polishing the surfaces will remove dirt or oxides and improve the quality of the welding joint 80.

Furthermore, the method may comprise drilling s107 a hole 90 through the sleeve 50 to enable pressure-testing of the welding joints 80 from inside the sleeve 50. The hole 90 is suitably drilled outside the overlap at the outer pipe ends 12, and thus only in the sleeve 50.

After having pressure-tested the welding joints 80, the method may comprise filling s108 the space between the inner pipe 30 and the sleeve 50 with insulation through the drilled hole 90 and sealing the hole 90. The drilled hole 90 may be sealed using a conical plastic plug that are welded in the hole 90.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A method for joining or repairing thermally-insulated piping (100), the piping (100) comprising an outer pipe (10) surrounding an inner pipe (30) embedded in an insulating layer (20), wherein a section (32) of the inner pipe (30) is substantially exposed between two mutually opposing pipe ends (12) of the outer pipe (10), wherein the method comprises:
- providing (s101) a heat-shrinkable sleeve (50) of weldable plastic material to cover the exposed section (32) of the inner pipe (30);
- arranging (s102) an electrically conductive strip (60) around each outer pipe end (12), such that there is a predetermined gap (G) between the strip ends (62);
- connecting (s103) electrical conductors (70) to the strip ends (62);
- positioning (s104) the sleeve (50) such that it overlaps the conductive strips (60) and heating the sleeve (50) so that it shrinks onto the outer pipe ends (12); and
- forming (s105) welding joints (80) by applying a pressure on the overlaps, except at the gap (G) between the strip ends (62), and applying an electric current to the electrical conductors (70), thereby heating and fusing the strips (60) with the plastic surfaces lying in abutment therewith and creating an expansion zone (Z) at the gap (G) between the strip ends (62) where molten plastic material will accumulate and form a protrusion (84).

2. The method according to claim 1, wherein the welding joints (80) are formed (s105) by means of an apparatus (200) configured to apply the pressure, the apparatus (200) comprising a clamping device (210) and a tensioning device (240), wherein the tensioning device (240) comprises two rollers (244) arranged in parallel with a gap (246) between one another, wherein the apparatus (200) is configured to be arranged with the gap (246) between the rollers (244) aligned with the gap (G) between the strip ends (62).

3. The method according to claim 1 or 2, wherein the predetermined gap (G) between the strip ends (62) is 4-5 millimetres.

4. The method according to any one of the preceding claims, wherein connecting (s103) the electrical conductors (70) to the strip ends (62) involves folding the strip ends (62) over the electrical conductors (70).

5. The method according to any one of the preceding claims, further comprising:
- brushing (s106) an inner surface of the sleeve (50) and an outer surface of the outer pipe ends (12) before arranging (s102) the strip (60) between said surfaces.

6. The method according to any one of the preceding claims, further comprising:
- drilling (s107) a hole (90) through the sleeve (50) to enable pressure-testing of the joint (80) from inside the sleeve (50).

7. The method according to claim 6, further comprising:
- filling (s108) the space between the inner pipe (30) and the sleeve (50) with foam through the drilled hole (90) and sealing the hole (90).

8. An apparatus (200) for joining or repairing thermally-insulated piping (100), the piping (100) comprising an outer pipe (10) surrounding an inner pipe (30) embedded in an insulating layer (20), wherein a section (32) of the inner pipe (30) is substantially exposed between two mutually opposing pipe ends (12) of the outer pipe (10), and a heat-shrinkable sleeve (50) of weldable plastic material is provided to cover the exposed section (32) of the inner pipe (30) and overlap the outer pipe ends, and wherein electrically conductive strips (60) are arranged around each outer pipe end (12), such that there is a predetermined gap (G) between the strip ends (62) and electrical conductors (70) are connected to the strip ends (62), the apparatus (200) comprising:
- a clamping device (210) comprising a clamping band (212) configured to be arranged in a loop around the sleeve (50) when having shrunk onto the outer pipe ends (12); and
- a tensioning device (240) connectable to the clamping band (212) and configured to tighten and retain the clamping band (212) to apply a pressure on the overlaps, except at the gap (G) between the strip ends (62) so that, when electric current is applied to the electrical conductors (70), an expansion zone (Z) is created at the gap (G) between the strip ends (62) where molten plastic material will accumulate and form a protrusion (84).

9. The apparatus (200) according to claim 8, wherein the tensioning device (240) comprises two guide rollers (244) arranged in parallel with a gap (246) between one another, the clamping band (212) running between the guide rollers (244), wherein the apparatus (200) is configured to be arranged with the gap (246) between the guide rollers (244) aligned with the gap (G) between the strip ends (62).

10. The apparatus (200) according to claim 8 or 9, wherein the clamping band (212) is laminated with a polymer material.

11. The apparatus (200) according to any one of claims 8-10, wherein the clamping band (212) comprises Kevlar and Teflon.

12. The apparatus (200) according to any one of claims 8-11, further comprising a support part (250), configured to abut the sleeve (50) during welding.

13. The apparatus (200) according to any one of claims 8-12, wherein the tensioning device (240) comprises a latching mechanism (248) allowing the clamping band (212) to move freely in one direction and of latching the clamping band (212) in an opposite direction to enable the tensioning force to be applied.

14. The apparatus (200) according to any one of claims 8-13, further comprising a guiding element (260) configured to be arranged between the two guide rollers (244) to guide the molten plastic material in the expansion zone (Z) during welding.

15. The apparatus (200) according to claim 14, wherein the guiding element (260) is wedge-shaped with a bottom part (261) and two side parts (262), wherein the guiding element (260) is configured to be arranged with the side parts (262) facing the guide rollers (244) and the bottom part (261) facing the sleeve (50) during welding.

16. The apparatus (200) according to claim 15, wherein the bottom part (261) of the guiding element (260) comprises a recess (262) configured to form the protrusion (84) of molten plastic material.
